Europäisches Patentamt

European Patent Office

Office européen des brevets

(11) Publication number: **0 231 157**
**B1**

(12) **EUROPEAN PATENT SPECIFICATION**

(45) Date of publication of patent specification: **26.09.90**

(21) Application number: **87830029.2**

(22) Date of filing: **23.01.87**

(51) Int. Cl.⁵: **F 16 F 15/26, F 02 B 75/20**

(54) Two-cylinder engine with a device for balancing the alternating inertia forces.

(30) Priority: **24.01.86 IT 6705986**

(43) Date of publication of application:
**05.08.87 Bulletin 87/32**

(45) Publication of the grant of the patent:
**26.09.90 Bulletin 90/39**

(84) Designated Contracting States:
**DE ES FR GB SE**

(56) References cited:
**DE-A-2 932 678**
**US-A-4 509 378**

**PATENT ABSTRACTS OF JAPAN, vol. 4, no. 187
(M-48)669r, 23rd December 1980; & JP-A-55 132
437 (FUJI JUKOGYO K.K.) 15-10-1980**

(73) Proprietor: **FIAT AUTO S.p.A.**
**Corso Giovanni Agnelli 200**
**I-10135 Torino (IT)**

(72) Inventor: **Cuccato, Ubaldo**
**Via Boccaccio 18 bis.**
**I-10132 Torino (IT)**

(74) Representative: **Buzzi, Franco et al**
**c/o Jacobacci-Casetta & Perani S.p.A. Via Alfieri,
17**
**I-10121 Torino (IT)**

Courier Press, Leamington Spa, England.

## Description

The present invention relates to a two-cylinder internal combustion engine including a crankshaft, two parallel cylinders in which there are reciprocatingly slidable two pistons having respective connecting rods connected to the crankshaft in correspondence with respective crank pins disposed at 360°, and counter-rotating eccentric mass means for balancing the alternating first-order forces during operation of the engine.

In engines of this type, the eccentric counter-rotating mass means are constituted by a shaft rotating in the opposite sense from the crankshaft, parallel thereto, and carrying eccentric masses able to create a centrifugal force which is added to that generated by the counterweights on the crankshafts when the pistons are dead centre but is in opposition when the pistons are midstroke, giving rise to a zero resultant. Thus, the alternating first-order forces are balanced.

· The use of counter-rotating shafts to solve the problem of vibrations is not without disadvantages. In fact, in addition to the increased weight, bulk and cost, it must be remembered that the counter-rotating shafts annul the effects of the inertia forces at the level of the supports for the engine on its supporting structure but do not eliminate the stresses which they discharge on the crankshaft (and hence on its main journals) within the engine.

The object of the present invention is to provide an engine which does not have these disadvantages and which is simple and cheap to manufacture.

According to the invention, this object is achieved by virtue of the fact that the eccentric mass means are supported directly by the crankshaft, and by the fact that drive means are provided which are driven by the shaft to effect the counter-rotation of the eccentric mass means at the same speed of rotation as the crankshaft and that the eccentric mass means comprise a single eccentric mass carried by a sleeve member rotatable coaxially on a central portion of the crankshaft between the two crank pins.

By virtue of these characteristics, (the first and second of which are known per se in a single cylinder engine from US-A-4509378), the alternating first-order forces are balanced "within" the crankshaft without stressing the bearings of the shaft; thus, there is a more reliable operation and a lower probability of breakdown. Moreover, the balancing system of the present invention has a small bulk and thus allows an engine to be made which is more compact and lighter.

Furthermore, due to the configuration of the eccentric mass, the couples due to the alternating first-order forces are completely balanced, giving a further reduction in the forces on the crankshaft bearings.

Further advantages and characteristics of the engine according to the present invention will become clear from the detailed description which follows, purely by way of non-limiting example, with reference to the appended drawings, in which:

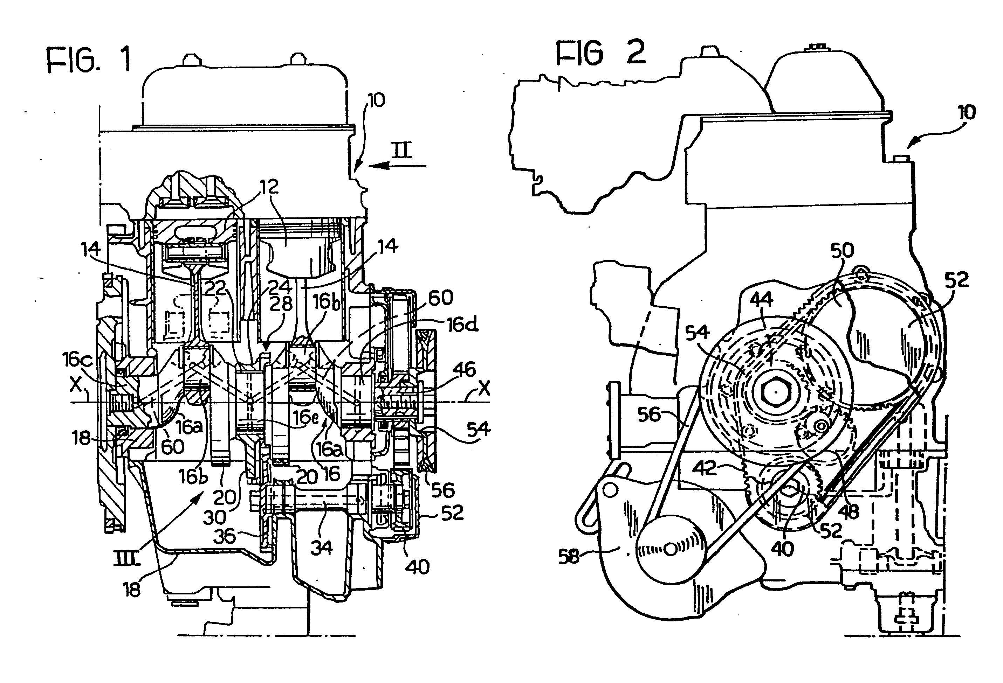

Figure 1 is a partially-sectioned side view of the engine of the invention,

Figure 2 is a view taken on the arrow II of Figure 1,

Figure 3 is a detail of Figure 1 on an enlarged scale, and

Figure 4 is a section taken on the line IV-IV of Figure 3.

With reference to the drawings, a two-cylinder four-stroke engine with parallel cylinders is generally indicated 10 and has pistons 12, connecting rods 14 and a crankshaft 16. The shaft 16, whose axis is indicated X-X in the drawings, has two cranks 16a at 360° and a corresponding pair of crank pins 16b. The crankshaft 16 also has two main journals, 16c and 16d respectively, at its ends rotatably supported by the structure of the engine, indicated 18, and two counterweights 20 interposed between the crank pins 16b.

Between the counterweights 20, the crankshaft 16 has a central cylindrical portion 16e coaxial with the axis X-X, on which a sleeve member 24 is rotatably mounted with the interposition of a plain bearing 22.

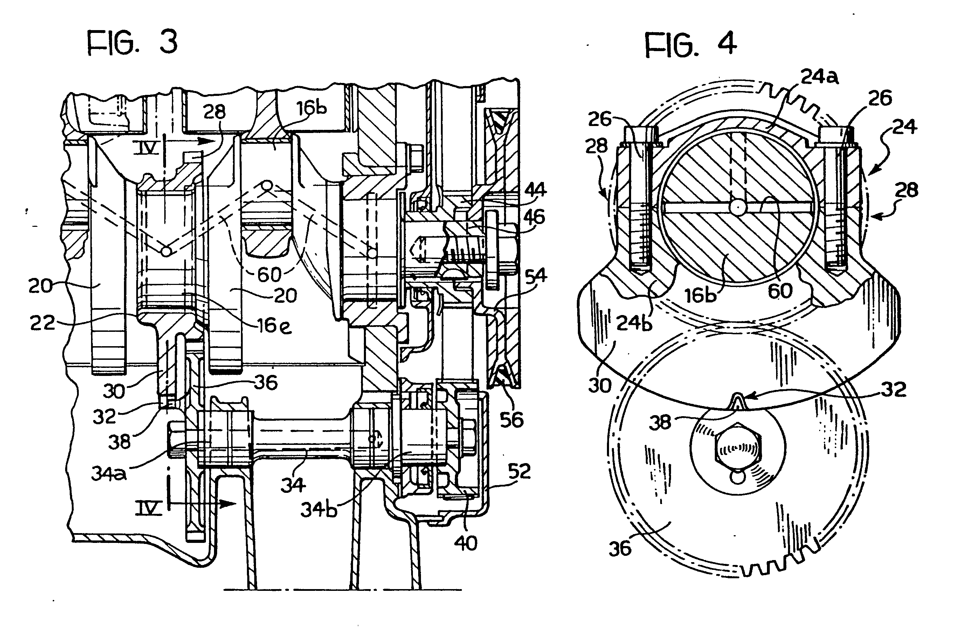

As shown in Figure 4, the member 24 includes two half-shells, 24a and 24b respectively, joined by fixing screws 26. The sleeve member 24 also has an external ring gear 28 and an eccentric mass 30 fixed to the half-shell 24b and provided with a reference notch 32.

The structure 18 of the engine 10 rotatably supports an auxiliary shaft 34 parallel to the crankshaft 16 and having ends 34a and 34b respectively. A gear wheel 36 is keyed onto the end 34a of the shaft 34 and meshes with the ring gear 28 of the sleeve member 24. The gear 36 has an axial reference projection 38 corresponding and complementary to the notch 32 of the eccentric mass 30. A toothed pulley 40 is keyed onto the end 34b of the driving shaft 34 and is rotated, during operation of the engine, by a toothed belt 42 driven in its turn by a toothed pulley 44 keyed onto an end portion 46 of the driving shaft 16 adjacent the main journal 16d. The toothed belt 42 is tensioned by a tensioning roller 48 and also drives a toothed pulley 50 for rotating the timing shaft (not illustrated). The toothed pulleys 40, 44, 50 and the toothed belt 42 are enclosed in a protective casing 52. A pulley 54 is also keyed onto the end portion 46 of the crankshaft 16, outside the casing 52, and drives an alternator 58 through a V-belt 56.

The crankshaft 16 has internal passages 60 for the circulation of lubricating oil for lubricating the crank pins 16b, the main journals 16c and 16d, and the plain bearing 22 of the sleeve member 24. Moreover, the ring gear 28 of the member 24 has the same number of teeth for each half-shell 24a and 24b, the distance between the half-shells being such that the line of separation corresponds to the gap between two consecutive teeth.

During operation of the engine, the crankshaft 16 rotates the auxiliary shaft 34 on which the gear 36 is keyed through the toothed pulley 44, the toothed belt 42 and the toothed pulley 40. The auxiliary shaft 34 rotates in the same sense as the crankshaft 16, while the sleeve member 24 rotated by the ring gear 28 meshing with the gear 36 rotates in the opposite sense to the crankshaft 16. The transmission ratio between the crankshaft 16 and the sleeve member 24 is such that the sleeve member and the eccentric mass 30 fixed thereto rotate at the same speed of rotation as the crankshaft 16. With regard to the balancing of the alternating first-order forces, the member 24 and the eccentric mass 30 behave substantially identically to the eccentric masses of the prior-art counter-rotating shafts.

The correct angular positioning of the eccentric mass 30 relative to the counterweights 20 of the driving shaft 16 is achieved by the projection 38 and the corresponding notch 32 which enable the synchronization of the eccentric mass 30 relative to the alternating masses of the crankshaft 16, as well as by the normal references on the toothed pulleys 40 and 44 (like those used for the phasing of the timing shaft).

## Claims

1. Two-cylinder internal combustion engine including a crankshaft (16), two parallel cylinders in which there are reciprocatingly slidable two pistons (12) having respective connecting rods (14) connected to the crankshaft (16) in correspondence with respective crank pins (16b) disposed at 360°, and counter-rotating eccentric mass means for balancing the alternating first-order forces during operation of the engine, characterised in that the eccentric mass means (24, 30) are carried directly by the crankshaft (16), in that drive means (44, 42, 40, 34, 36, 28) are provided which are driven by the shaft (16) to effect the counter-rotation of the eccentric mass means (24, 30) at the same speed of rotation as the crankshaft (16), and in that the eccentric mass means comprise a single eccentric mass (30) carried by a sleeve member (24) rotatable coaxially on a central portion (16a) of the crankshaft (16) between the two crank pins (16b).

2. Engine according to Claim 1, characterised in that the means for driving the counter-rotation of the sleeve member (24) comprise a peripheral ring gear (28) formed on the member (24) and meshing with a complementary gear (36) carried by an auxiliary shaft (34) parallel to the crankshaft (16) and driven thereby.

3. Engine according to Claim 2, characterised in that the auxiliary shaft (34) is rotated by the crankshaft (16) through a toothed-belt transmission (44, 42, 40).

4. Engine according to Claim 2 or Claim 3, characterised in that the gear (36) has a lateral axial reference projection (38) corresponding to a complementary notch (32) in the mass (30) for ensuring that the mass is in exact angular phase with the crankshaft (16).

## Patentansprüche

1. Zweizylinder-Brennkraftmaschine mit einer Kurbelwelle (16), zwei parallelen Zylindern, in denen zwei Hubkolben (12) gleitend angeordnet sind, die jeweils über eine Kolbenstange (14) im Bereich entsprechender, im Winkelabstand von 360° angeordneter Kurbelzapfen (16b) mit der Kurbelwelle (16) verbunden sind, und einer gegenläufig rotierenden exzentrischen Massenanordnung zum Ausgleich der Wechselkräfte erster Ordnung während Betrieb der Maschine, dadurch gekennzeichnet, daß die exzentrische Massenanordnung (24, 30) direkt von der Kurbelwelle (16) getragen ist, daß Antriebsmittel (44, 42, 40, 34, 36, 28) vorgesehen sind, die von der Kurbelwelle (16) angetrieben werden, um die exzentrische Massenanordnung (24, 30) mit derselben Geschwindigkeit gegenläufig zu drehen, mit der die Kurbelwelle (16) rotiert, und daß die exzentrische Massenanordnung eine einzige exzentrische Masse (30) umfaßt, die von einem Muffenteil (24) getragen ist, das auf einem zwischen den beiden Kurbelzapfen (16b) liegenden zentralen Abschnitt (16a) der Kurbelwelle (16) koaxial drehbar gelagert ist.

2. Maschine nach Anspruch 1, dadurch gekennzeichnet, daß die Antriebsmittel für die gegenläufige Drehbewegung des Muffenteils (24) einen an dem Muffenteil (24) ausgebildeten peripheren Zahnring (28) umfassen, der mit einem komplementären Zahnrad (36) kämmt, das von einer parallel zur Kurbelwelle (16) angeordneten und von dieser angetriebenen Hilfswelle (34) getragen ist.

3. Maschine nach Anspruch 2, dadurch gekennzeichnet, daß die Hilfswelle (34) von der Kurbelwelle (16) über ein Zahnriemengetriebe (44, 42, 40) gedreht wird.

4. Maschine nach Anspruch 2 oder 3, dadurch gekennzeichnet, daß zur Gewährleistung einer genauen Winkelphasenrelation zwischen Masse und Kurbelwelle (16) an dem Zahnrad (36) ein seitlicher axialer Bezugsansatz (38) vorgesehen sit, dem eine komplementäre Vertiefung (32) in dergenannten Masse (30) entspricht.

## Revendications

1. Moteur à combustion interne à deux cylindres comprenant un vilebrequin (16), deux cylindres parallèles dans lesquels coulissent alternativement deux pistons (12) possédant des bielles respectives (14) reliées au vilebrequin (16) au niveau de manetons respectifs (16b) disposes à 360°, et des moyens formant masse excentrique contrarotative servant à équilibrer les forces alternatives de premier ordre pendant le fonctionnement du moteur, caractérisé en ce que les moyens formant masse excentrique (24, 30) sont portés directement par le vilebrequin (16) et en ce qu'il est prévu des moyens d'entraînement (44, 42, 40, 34, 36, 28) qui sont entraînés par le vilebrequin (16) pour provoquer la contre-rotation des moyens formant masse excentrique (24, 30) à la même vitesse de rotation que le vilebrequin (16), et que les moyens formant masse excentrique comprennent une seule masse excentrique (30) portée par un manchon (24) qui tourne coaxialement sur une partie centrale (16a) du vilebrequin (16) entre les deux manetons (16b).

2. Moteur selon la revendication 1, caractérisé en ce que les moyens servant à commander la contre-rotation du manchon (24) comprennent une couronne dentée périphérique (28) formée sur le manchon (24) et qui engrène avec une roue dentée complémentaire (36) portée par un arbre auxiliaire (34) parallèle au vilebrequin (16) et entraîné par celui-ci.

3. Moteur selon la revendication 2, caractérisé en ce que l'arbre auxiliaire (34) est entraîné en rotation par le vilebrequin (16) par l'intermédiaire d'une transmission à courroie crantée (44, 42, 40).

4. Moteur selon la revendication 2 ou la revendication 3, caractérisé en ce que la roue dentée (36) porte une saillie de référence axiale latérale (38) qui correspond à une encoche complémentaire (32) pratiquée dans la masse (30) pour garantir que la masse sera exactement en phase angulaire avec le villebrequin (16).

FIG 2

FIG. 1

# FIG. 3

# FIG. 4

EP 0 231 157 B1